# EUROPEAN PATENT APPLICATION

(11) **EP 3 015 361 A1**
(43) Date of publication of application: **04.05.2016**
(21) Application number: 14382424.1
(22) Date of filing: 30.10.2014
(51) Int. Cl.: B64C 5/02

(54) **Central area arrangement for continuous horizontal tail plane torsion box**

(71) Applicant: Airbus Operations, S.L., 28906 Getafe (Madrid) (ES)
(72) Inventor: Guinaldo Fernández, Enrique, 28906 Getafe (Madrid) (ES); García Nieto, Carlos, 28906 Getafe (Madrid) (ES); Vélez de Mendizábal Alonso, Iker, 28906 Getafe (Madrid) (ES); Honorato Ruiz, Francisco, Javier, 28906 Getafe (Madrid) (ES); Cruz Domínguez, Francisco, Jose, 28906 Getafe (Madrid) (ES); Ramos García, Luis, 28906 Getafe (Madrid) (ES)
(74) Representative: Carpintero Lopez, Francisco

(57) **Abstract**

The present invention refers to an aircraft horizontal tail plane HTP (1) of the continuous type, wherein the inner-most ribs (11,11') of the right-hand side and lefthand side torsion boxes (2,2') are arranged to have one end joined right at the joint zone (12) where both rear spars (4,4') meet at axis of symmetry (X) of the HTP (1). In this way, the loads at this central region of the HTP are concentrated at the joint zone (12) where the inner-most ribs and the rear spars converge, so that the traditional central rib of this type of HTP's is eliminated. The HTP of the invention can be manufactured with a reduced number of components, and therefore it is lighter than prior art HTP's, and can be manufactured easier and faster than traditional HTP designs.

## Description

### Object of the invention

The present invention refers in general to aircraft structures formed with torsion boxes, and manufactured mainly with Carbon Fiber Reinforced Plastic (CFRP) materials.

An object of the invention is to provide an aircraft horizontal tail plane (HTP) which is lighter than prior art HTP's, and which additionally can be manufactured and assembled easier and faster than traditional HTP designs.

### Background of the invention

The structure of a horizontal tail plane (HTP) of an aircraft, also known as horizontal stabilizer, typically comprises a torsion box on which other elements such as upper and lower coves (skins), leading and trailing edges, and elevators are mounted.

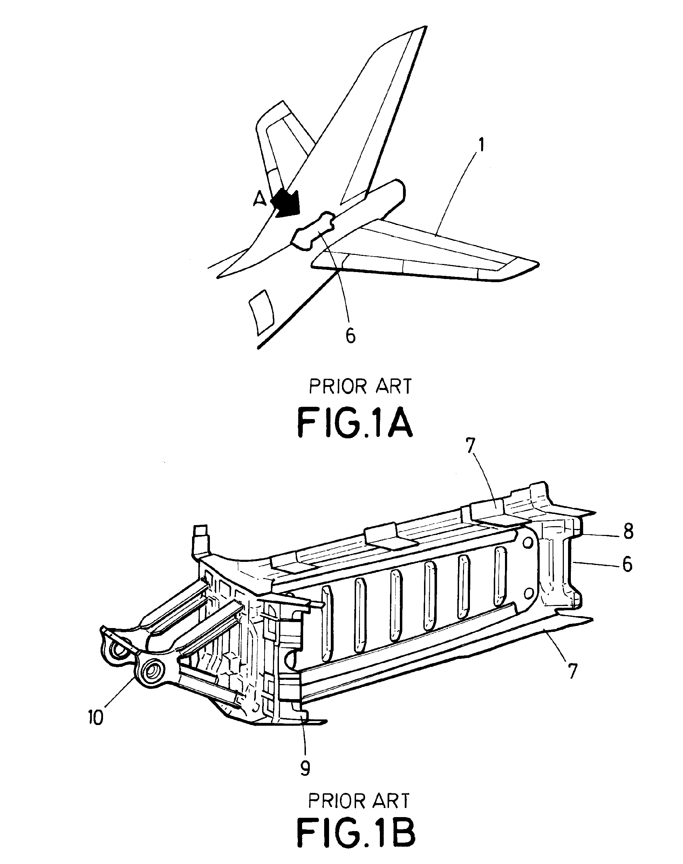

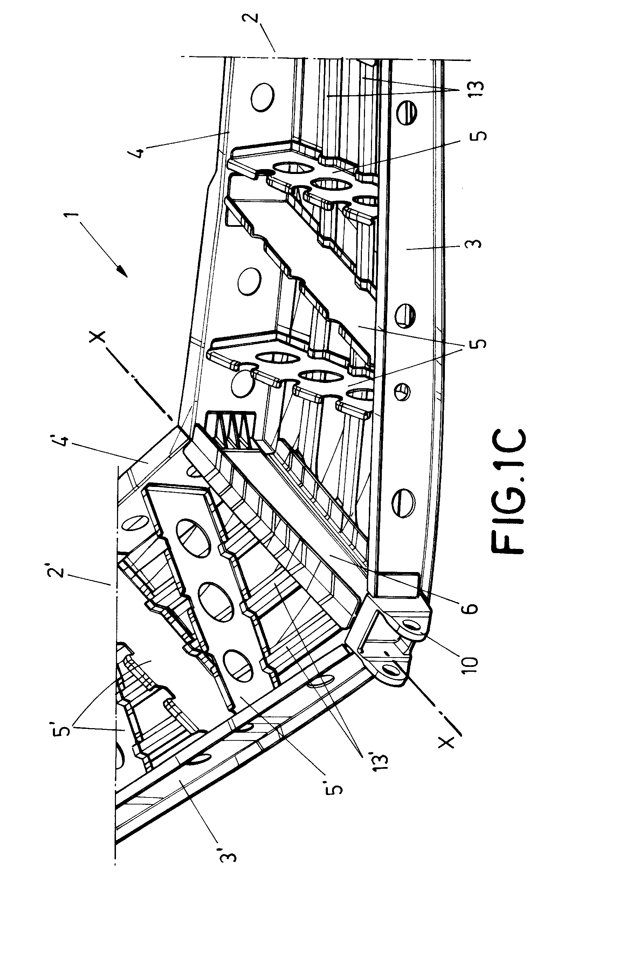

The elevators are control surfaces of the aircraft and are hinged to the torsion box, which is the structural component of the HTP and as such, it has to withstand the loads to which the HTP is subjected. An example of a conventional HTP torsion box is shown in Figure 1, and is formed by two lateral torsion boxes (2,2') (right-hand side and left-hand side torsion box) joined to each other at the central region of the HTP (1), and symmetrically arranged with respect to the axis of symmetry of the horizontal tail plane.

In turn, each torsion box (2,2') is formed by front and rear spars (3,4, 3',4') and a plurality of ribs (5,5') transversally arranged and fitted to the respective front and rear spars (3,4, 3',4'), such as to form together a box-like configuration.

There are two different techniques for joining both lateral torsion boxes in a continuous torsion box: either by means of a single central rib (6), or by means of a central box structure (not shown) for large scale aircrafts. Figure 1 shows this single central rib concept, wherein it can be observed in drawing 1 C that the single central rib (6) is placed right at the middle of the HTP (1) aligned with the axis of symmetry (X) of the HTP.

The structure and configuration of a known central rib (6) is represented in drawing 1 B, in this case a central rib of a single aisle scale aircraft.

Due to the axial arrangement of the central rib in the HTP, the central rib has to be designed to withstand heavy loads, and for reason this single central rib (6) is composed by a large number of components assembled together, many of them metallic, such as different titanium T-shaped parts (7), tee joints, inner T profiles, rear and inner profiles (8,9), stiffeners and aluminum parts. Additionally, a front fitting (10) for coupling a trimming actuator, is commonly fitted to the front end of the central rib (6).

Consequently, the central rib (6) is a bulky component which is difficult to manufacture, and that contributes significantly to the total weight of the HTP.

### Summary of the invention

The present invention is defined in the attached independent claim and it overcomes the above-mentioned drawbacks of the prior art, by providing a horizontal stabilizer or (HTP), which can be manufactured with a reduced number of components and therefore is lighter than prior art HTP's, and which can be manufactured easier and faster than traditional HTP designs.

In the invention, the structure of the HTP central region has been redesigned in such a manner that the structural loads at this central region are distributed and reacted differently such as the classical central rib is no longer needed, and therefore that component can be eliminated to reduce weight of the structure.

This is achieved by slightly modifying the location of some of the other components of the HTP such as to distribute the loads at this central region differently. In particular, the inner-most ribs of the right-hand side and left-hand side torsion boxes, are arranged to have one end joined right at the point or zone where both rear spars meet at the axis of symmetry of the horizontal tail plane.

In this way, a highly loaded area is formed by the junction of the ends of the two rear spars and the rear end of the inner-most ribs of the lateral torsion boxes. This highly loaded area is formed at the rear vertex of the HTP, and thus is located at the axis of symmetry of the HTP. The technical effect of this arrangement is that the loads at the central region of the HTP are concentrated at said highly loaded area, and are efficiently reacted by the HTP structure without a central rib.

Therefore, an aspect of the invention refers to a horizontal tail plane for an aircraft, conventionally comprising first and second lateral torsion boxes joined to each other at a central region thereof, and symmetrically arranged with respect to the axis of symmetry of the horizontal tail plane, assuming that the HTP is a symmetrical structure.

Each lateral torsion box comprises front and rear spars, and a plurality of ribs having ends joined to the respective front and rear spars. The rear spars of the first and second lateral torsion boxes are joined or meet to each other at a joint zone located at the axis of symmetry of the horizontal tail plane. The HTP has a V-shaped configuration having front and rear vertex. Said join zone is formed at the rear vertex of the HTP.

In the horizontal tail plane of the invention, the inner-most ribs of the first and second lateral torsion boxes are so arranged to converge towards said joint zone. The inner-most ribs of the first and second lateral torsion boxes, have one end joined right to the inner end of the respective left or right rear spar. In this way, the loads at this central region are concentrated at the rear vertex of the HTP, and the loads at that joint zone are properly reacted by the inner-most ribs and the rear spars.

Furthermore, the stringers of the first and second lateral torsion boxes, do not extend through the central region of the HTP. Instead, the stringers of the lateral torsion boxes are terminated right below the respective inner-most rib, that is, there are no stringers at the central region of the HTP, or at least there are less number of stringers compared with prior art HTP designs.

Additionally, in some practical applications of the invention, the upper and lower covers or skins of the HTP are thicker at this central area of the HTP.

The horizontal tail plane of the invention, comprises upper and lower covers obtained from a composite material, such a CFRP, said covers extending from one tip to the other tip of the horizontal tail plane, and have been obtained as an unitary body by means of an automated composites manufacturing process, such as Fiber Placement or Automated Tape Laying (ATL).

A consequence of this arrangement of the inner-most ribs, is that the HTP of the invention is characterized in that it has no central rib. In other words, in the HTP of this invention, none of the ribs of the HTP is located at the symmetry axis of the HTP.

Some advantages of the invention can be summarized as follows:
- HTP weight reduction due to components removal, in particular removal of the central rib and part of the stringers.
- Improve stringers run-outs performance, as they are fully covered (feet, head and webs) by the ribs. Delay/Avoid stringer feet de-bonding in the run out area.
- Minimize manufacturing and assembly time and cost compared with prior art HTP concepts.

### Brief description of the drawings

Preferred embodiments of the invention, are henceforth described with reference to the accompanying drawings, wherein:
Figure 1.- represents at HTP single central rib concept of the prior art, wherein drawing A is a perspective view of the rear section of an aircraft where the position of the central rib is indicated by an arrow; drawing B is a perspective view of a central rib; and drawing C is a perspective view of a central region of a continuous HTP, showing the arrangement of the single central rib.

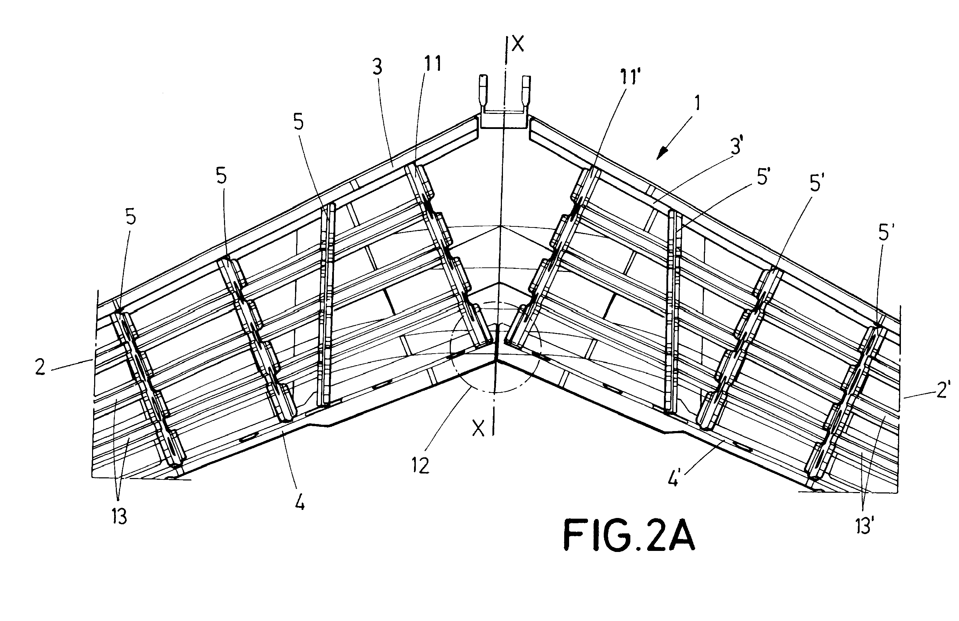

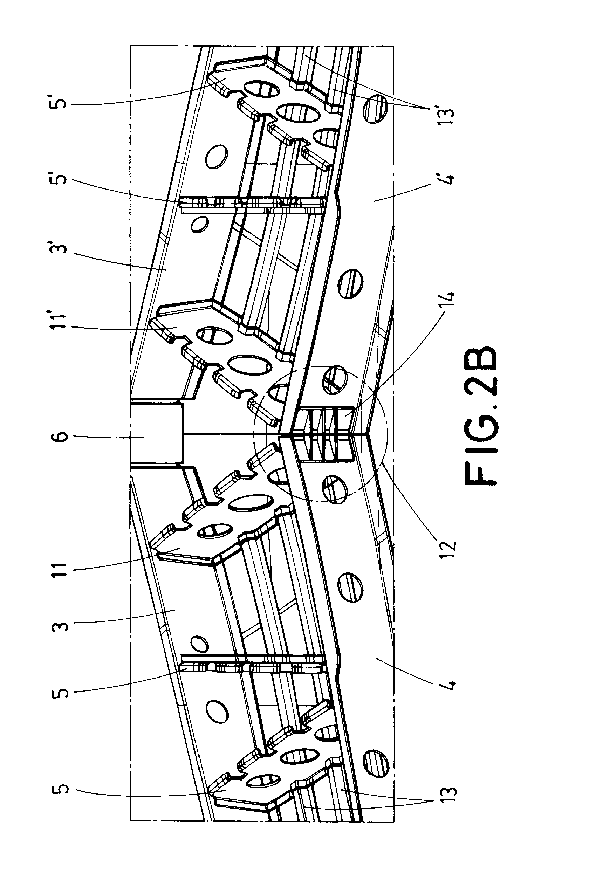

Figure 2.- shows in drawing A a top plant view of the central region of a HTP torsion box according to the invention, with the upper cover removed to visualize the internal components of the torsion box. Drawing B is a perspective view of the same torsion box.
Figure 3.- shows a perspective view of an enlarged detail of the assembly between the inner-most ribs of the torsion box and the stringers according to the invention.

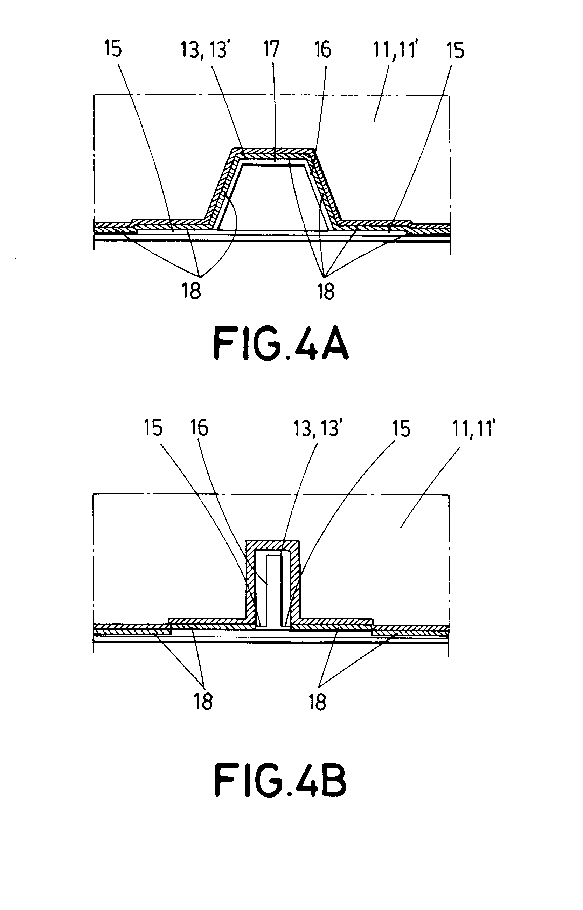

Figure 4.- shows in cross-sectional view, an schematic representation of the assembly mentioned in figure 3, for the case of omega-shaped stringers (drawing A), and for T-shaped stringers (drawing B).

### Preferred embodiment of the invention

Drawing 2A shows a preferred embodiment of an horizontal tail plane HTP (1) according to the invention, comprising first and second lateral torsion boxes (2,2') joined to each other at a central region of the HTP, and symmetrically arranged with respect to the axis of symmetry (X) of the HTP (1). Each of said lateral torsion boxes (2,2') comprises respectively front and rear spars (3,4,3,'4'), and a plurality of ribs (5,5') having ends respectively joined to the front and rear spars (3,4,3',4'). The rear spars (4,4') are joined to each other at a joint zone (12) located at the rear vertex of the HTP and within the axis of symmetry (X) of the HTP (1).

According to the invention, the inner-most ribs (11,11'), that is, the ribs closer to the axis of symmetry (X), are arranged as to converge towards said joint zone (12). Therefore, the HTP (1) of the invention has an intersection point at said joint zone (12), wherein both rear spars (4,4') and the inner-most ribs (11,11') intersect. In this way a hard point is formed at that zone where the loads are concentrated.

In this embodiment, the inner-most ribs (11,11') are arranged to define a 90° angle with the respective rear spar (4,4') to which is joined.

As it can be observed in drawing 2A, in the HTP (1) of the invention there is no central rib located along the axis of symmetry (X) of the HTP (1). In this way, all the ribs (5,11,5',11') of the first and second torsion boxes (2,2'), are positioned to define an angle (α) different than 0° with respect to the axis of symmetry (X) of the horizontal tail plane, or are positioned parallel to the axis of symmetry (X) of the horizontal tail plane. Said angle (α) is formed by the intersection between the axis (X) and a straight line passing along each rib, taking into account that the ribs are generally flat.

The HTP (1) comprises a reinforcement metallic plate (14) fitted to both rear spars (4,4') end at the joint zone (12). At the front part of the HTP, a front fitting (6) is provided to receive a trimming actuator (not shown) for the HTP. The inner ends of the front spars (3,3') are joined to the front fitting (6).

Conventionally, the first and second lateral torsion boxes (2,2') comprise a plurality of stringers (13,13') longitudinally arranged in torsion box shown in drawing 2A. Since the loads are now concentrated in said hard point, there is no need to extend the stringers towards the central region, thus, some of the stringers, preferably all of them, are terminated at the respective inner-most rib (11,11') as shown in drawing 2A. In this manner, an additional weight reduction of the HTP is achieved.

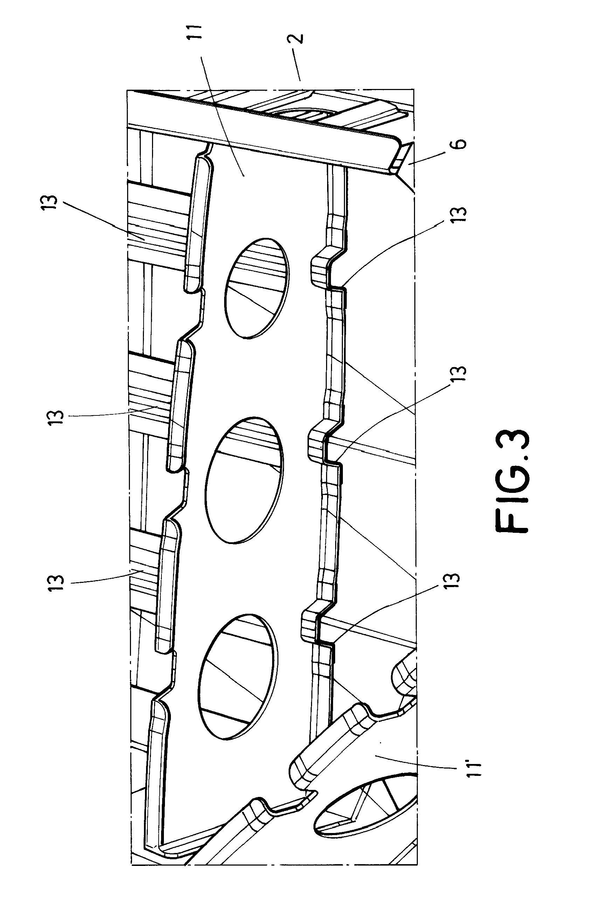

This arrangement is shown in more detail in figure 3, wherein it can be observed that each stringer (13,13'), in this case of the first torsion box (2) and lower skin, has one end located at a plane defined by the inner-most rib (11). The same arrangement is formed at the upper cover of the same torsion box, and equally at the upper and lower covers of the second torsion box (2').

Most of the components of the HTP are manufactured with Carbon Fiber Reinforced Plastic (CFRP) materials.

These stringers (13,13") can be omega-shaped or T-shaped stringers as shown in drawings 4A,4B, and typically are configured with a run-out section at its end. The inner-most ribs (11,11'), are configured to match with the shape of that run-out section of all the stringers, such as this run-out section is covered by the inner-most rib. Furthermore, the stringers (13,13") and the respective inner-most rib (11,11') are co-bonded together.

It has been observed in figure 3 how the end of the stringers coincides with the rib, that is, is covered by the rib. This arrangement improve the performance of the run-out section of the stringers, since any peeling effect at the end of the stringer is avoided thanks to the rib flange which is placed on the end of the stringer.

Drawings 4A,4B show this arrangement in more detail, wherein it can be noted that stringers feet (15), webs (16) and heads (17) in the case of omega stringers stiffened covers (drawing 4A), or only the feet (15) in the case of T stringers stiffened covers (drawing 4B), are covered by a part of the respective inner-rib (11,11').

The components of the HTP can be integrated in the structure, by means of riveting, co-curing (if all parts are prepreg), or co-bonding (in a hard/wet prepreg preparation, or in RTM/wet prepreg). Preferably, the ribs already cured are co-bonded (previously cured prepreg or RTM) to wet prepreg ATL omega stringers and skin assembly in a one shot curing cycle, but nevertheless, co-cured and riveted options are feasible. Drawings 4A,4B show the resulting co-bonded interfaces (18) of the parts for the cases of omega and T stringers stiffened covers.

In some preferred embodiments of the invention and depending on the aircraft type, it might be desirable to slightly increase the center area skin thickness, and/or provide small stiffening elements, in order to compensate the now missing central rib. Preferably, the area of the covers with larger thickness, is provided at the central region of the HTP, and more specifically at the joint zone (12) where the concentration of loads is higher.

Some of the main advantages of the invention are: the weight, manufacturing and assembly costs reduction, due to the absence of a central rib; improved performance of the stringers run-out sections; provision of a fully integrated one shot continuous HTP torsion box structure.

Other preferred embodiments of the present invention are described in the appended dependent claims and the multiple combinations threreof.

## Claims

1. Horizontal tail plane for an aircraft, the horizontal tail plane comprising first and second lateral torsion boxes joined to each other at a central region thereof and symmetrically arranged with respect to the axis of symmetry of the horizontal tail plane,
wherein each of said lateral torsion boxes comprises front and rear spars, and a plurality of ribs having ends respectively joined to the front and rear spars,
and wherein the rear spars of the first and second lateral torsion boxes are joined to each other at a joint zone at the symmetry axis of the horizontal tail plane,
**characterized in that** the inner-most ribs of the first and second lateral torsion boxes are arranged as to converge towards said joint zone.

2. Horizontal tail plane according to claim 1 further comprising upper and lower covers obtained from a composite material and extending from one tip to the other tip of the horizontal tail plane, and wherein said upper and lower covers have been obtained by an automated composites manufacturing process as an unitary body.

3. Horizontal tail plane according to claim 1 or 2 wherein all the ribs of the first and second torsion boxes, are either positioned to define an angle different than 0° with respect to the axis of symmetry (X) of the horizontal tail plane, or are positioned parallel to the axis of symmetry (X) of the horizontal tail plane.

4. Horizontal tail plane according to any of the preceding claims wherein the first and second lateral torsion boxes further comprise a plurality of stringers longitudinally arranged in torsion box, and wherein at least one stringer of each lateral torsion box, has one end located at a plane defined by the inner-most rib.

5. Horizontal tail plane according to claim 4 wherein the stringer includes a run-out section at its end, and at least a part of this run-out section is covered by the respective inner-most rib.

6. Horizontal tail plane according to claim 4 or 5 wherein the stringer and the inner-most rib are co-bonded together.

7. Horizontal tail plane according to claim 5 or 6 wherein the stringers are omega-shaped or T-shaped stringers.

8. Horizontal tail plane according to any of the preceding claims wherein at least one of said covers is thicker in an area at the central region of the horizontal tail plane.

9. Horizontal tail plane according to any of the preceding claims wherein the inner-most ribs are arranged to define a straight angle with the respective rear spar to which is joined.

10. Horizontal tail plane according to any of the preceding claims further comprising a reinforcement metallic plate fitted to the rear spars ends at the joint zone.
